(19) Europäisches Patentamt
European Patent Office
Office européen des brevets

(11) Publication number: **0 491 229 B1**

(12) **EUROPEAN PATENT SPECIFICATION**

(45) Date of publication of patent specification: **24.05.95**

(51) Int. Cl.6: **B60C 1/00**, C08L 9/06, C08L 7/00, C08F 236/10, C08F 4/48

(21) Application number: **91120773.6**

(22) Date of filing: **03.12.91**

(54) **Pneumatic tires for heavy-load vehicles.**

(30) Priority: **18.12.90 US 629496**

(43) Date of publication of application:
**24.06.92 Bulletin 92/26**

(45) Publication of the grant of the patent:
**24.05.95 Bulletin 95/21**

(84) Designated Contracting States:
**DE ES FR GB IT LU**

(56) References cited:
**US-A- 3 303 225**

**WORLD PATENTS INDEX LATEST Week 8709, Derwent Publications Ltd., London, GB; AN 87-060530**

(73) Proprietor: **Bridgestone Corporation**
**1-1, Kyobashi 1-Chome**
**Chuo-Ku**
**Tokyo 104 (JP)**

(72) Inventor: **Hashimoto, Takatsugu**
**4-7-13 Ogawanishi-machi**
**Kodaira City,**
**Tokyo 187 (JP)**
Inventor: **Watanabe, Shuichi**
**1-6-29 Fujimidai**
**Hamura-City,**
**Tokyo 190-11 (JP)**
Inventor: **Makino, Yoshihiro**
**1015 Meadowbrook Road**
**Murfreesboro,**
**Tennessee 37130 (JP)**
Inventor: **Kang, Jung W.**
**6150 Terrace Hills Drive**
**Clinton,**
**Ohio 44216 (JP)**

(74) Representative: **Kraus, Walter, Dr. et al**
**Patentanwälte Kraus, Weisert & Partner**
**Thomas-Wimmer-Ring 15**
**D-80539 München (DE)**

EP 0 491 229 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to tires for heavy-load vehicles such as trucks and buses, and more particularly to radial tires for such heavy-load vehicles. At least the tread portion of the tire comprises an elastomer mixture of a copolymer composition of a 1,3-conjugated diene and an aromatic vinyl compound, and natural rubber.

Tires for heavy-load vehicles such as trucks and buses and construction vehicles are often run on unpaved roads which may contain exposed rocks and stones. Thus, in addition to the ability of the tires to carry large loads, the tires must be constructed to reduced objectionable generation of heat and to resist cut damage by sharp protrusions and breakage of the tire caused by growth of the cut damage or by the corrosion of steel cores when water is able to penetrate through the cut damage. It is desirable, therefore, that at least the tread portions of large tires where heavy-duty trucks and buses be capable of cut-resistance and chipping-resistance as well as resistance to heat build-up and wear. Radial tires have been developed and adapted for use on trucks and buses (hereinafter referred to as "TBR tires".

The present invention is not directed to tire construction, but rather, to the use of a novel elastomer mixture for preparing at least a tread portion of tires, especially radial tires designed for heavy load vehicles.

Rubbers prepared by the polymerization of conjugated dienes such as 1,3-conjugated dienes with aromatic vinyl compounds have been utilized previously as tire tread rubber compositions. Styrene-butadiene rubber (SBR) is an example of a synthetic rubber which has been used extensively in tires, but natural rubber and combinations of natural rubber and various butadiene rubbers such as SBR have been found to be more suitable for use in preparing tires to be utilized in heavy-duty vehicles. US-A-4,678,830, for example, describes a rubber composition having good wear-resistance and low fuel consumption, and the rubber composition comprises natural rubber alone or a blend of natural rubber and not more than 50% by weight of at least one diene-base synthetic rubber, and a particular carbon black. The use of natural rubber in truck and bus tires is also described in US-A-4,581,400. In this patent, a rubber composition is described which comprises 100 parts by weight of a rubber selected from the group consisting of natural rubber and synthetic diene rubbers and from about 1 to 30 parts by weight of a rosin derivative. The rubber composition is reported to exhibit improved cut-resistance.

The use of modified styrene-butadiene copolymers for heavy-duty pneumatic tires also is described in US-A-4,914,147. The modified styrene-butadiene copolymer is obtained by copolymerizing 15-50 parts by weight of styrene and 85-50 parts by weight of 1,3-butadiene in a hydrocarbon solvent in the presence of an organo lithium polymerization initiator. The active ends of the copolymer are then modified with a terminal modifying agent such as an alkenyl aromatic vinyl compound, halogenated tin compounds, halogenated silicon compounds, isocyanate compounds, etc. Various organo lithium polymerization initiators are described including alkyl lithiums such as n-butyl lithium, aryl lithiums such as phenyl lithium, alkylene dilithiums such as tetramethylene dilithium, arylene dilithiums such as 1,3-dilithio benzene, 1,3,5-trilithio cyclohexane, etc.

Various organometallic compounds have been described in the literature as useful in the polymerization and copolymerization of conjugated dienes. Among the catalysts which have been proposed are various alkali metal acetylides. For example, US-A-3,303,225 describes the use of metalated 1-acetylenes as active catalysts in the polymerization of vinylidene-containing monomers. Alkali metal acetylides containing one or more metal atoms are prepared by reacting an organo alkali metal compound with an acetylene under conditions to effect step-wise replacement of, first, the acetylenic hydrogen atom, and, second, the hydrogen atoms attached to the carbon atom which is alpha to the acetylenic linkage.

US-A-4,677,165 describes rubber compositions useful particularly for tire treads which comprise: a styrene-butadiene copolymer rubber prepared by random copolymerization of styrene with 1,3-butadiene by solution polymerization techniques utilizing an organic lithium compound as catalyst; from 80 to 250 phr of carbon black having a surface area of 100 to 400 $m^2/g$; and 30 to 280 phr of an aromatic oil. It is essential that the styrene-butadiene copolymer satisfies six requirements as identified in the specification and claims including the presence of one or more specific groups introduced into a molecular terminal or chain of the copolymer.

US-A-2,964,083 describes curable rubber tire tread stock and pneumatic tires having a tread portion made of such stock. The tread stock comprises a copolymer containing a major amount of a conjugated diolefinic compound and a minor amount of a copolymerizable monoolefinic compound such as styrene, a fine reinforcing high abrasion carbon black and at least 30 parts by weight of a compatible soft oil per 100 parts by weight of the copolymer.

JP-A-62 015 104 describes a tread portion made of a rubber composition comprising styrene-butadiene rubber, natural rubber, carbon black and a softening agent together with other ingredients usual in the art.

The invention provides pneumatic tires for heavy-load vehicles, and in particular radial tires are described wherein at least the tread portion of the tire is prepared from a vulcanizable elastomer composition comprising, as the elastomer component, an elastomer mixture comprising from 10% to 90% by weight of a gel -free copolymer composition of a 1,3-conjugated diene and an aromatic vinyl compound wherein the copolymer composition has a weight average molecular weight of greater than 100,000, and from 10% to 90% of natural rubber. The copolymer compositions are prepared utilizing a trimetalated 1-alkyne catalyst. The vulcanizable elastomer compositions preferably also contain from 25 to 250 parts by weight of carbon black per 100 parts by weight of the elastomer mixture.

Fig. 1 is a diagrammatical view of a reactor for preparing the copolymers used in the present invention in a continuous process.

Fig. 2 is a graph of torque vs. time identifying the points $ML_{in}$,$ML_{1+4}$, $AL_{80}$ and $AL_{1+4+5}$ used in determining percent relaxation of the copolymers used in the invention.

(A) Elastomer Mixture

The vulcanizable compositions useful in preparing the treads of the heavy-duty tires of the present invention comprise, as the elastomer component, an elastomer mixture (A) which comprises a gel-free ultra-high molecular weight copolymer composition of 1,3-conjugated dienes and aromatic vinyl compounds wherein the copolymer is obtained by polymerizing the conjugated diene and the aromatic vinyl compound in the presence of a catalyst comprising a trimetalated 1-alkyne described more fully below, and (A-2) natural rubber. The elastomer mixture (A) generally will comprise from 10% to 90% by weight of the ultra-high molecular weight copolymer and 10% to 90% by weight of the natural rubber. In one preferred embodiment, the mixture comprises 30% to 60% of the ultra-high molecular weight copolymer and 40% to 70% of the natural rubber. In yet another embodiment, the mixture contains less than 50% by weight of the copolymer and 50% or more of the natural rubber.

(A-1) The Copolymers.

The copolymers useful in the present invention are prepared by polymerizing a monomer mixture which comprises a conjugated diene and an aromatic vinyl compound in the presence of a catalyst comprising a trimetalated 1-alkyne as will be described more fully below. The polymers prepared in this manner generally will have a weight average molecular weight of greater than about 100,000, and in one preferred embodiment, the copolymers will have weight average molecular weights of greater than 900,000. The copolymers may be prepared by batch or continuous polymerization processes.

In one embodiment, the copolymers useful in the present invention are of the type generally referred to as ultra-high molecular weight copolymer compositions. In particular, the copolymer compositions are obtained by copolymerizing 1,3-conjugated dienes with aromatic vinyl compounds. The ultra-high molecular weight copolymer compositions obtained in accordance with the present invention are essentially free of gel and are further characterized as having a weight average molecular weight of greater than about 900,000. Ultra-high molecular weight copolymer compositions can be prepared having a weight average molecular weight of greater than 1,100,000. Other characterizing features of the ultra-high molecular weight copolymers include inherent viscosity, dilute solution viscosity and percent relaxation as determined using a Mooney viscometer. In one embodiment, the copolymer compositions are characterized as having an intrinsic viscosity ($\eta$) in tetrahydrofuran of at least 4.0, and in another embodiment, the copolymers have an intrinsic viscosity in tetrahydrofuran of at least about 4.5.

The ultra-high molecular weight compositions useful in the invention may also be characterized in terms of percent relaxation as determined by a procedure which will be discussed more fully below. In one embodiment, the compositions are characterized by percent relaxation values of at least 30% to 100%, and more particularly relaxations of from 30% to 70%.

The ultra-high molecular weight compositions also may be characterized as having a dilute solution viscosity in toluene of at least about 3.5 dl/g, and in one embodiment, the copolymers will have a dilute solution viscosity of at least about 4.0 dl/g. The ultra-high molecular weight copolymers generally will be characterized by an Mw/Mn of at least about 1.9, more often, between about 2.0 or 2.5 and 5.0. The Mooney viscosity ($ML_{1+4}$ @ 100 °C) of the copolymers is greater than 200.

The ultra-high molecular weight copolymer compositions also may be characterized by their molecular weight distribution. The copolymer compositions contain a large fraction of copolymer having a number

average molecular weight of greater than 1,000,000 and a small fraction of copolymer having a number average molecular weight of less than 100,000. In one embodiment of the present invention, the copolymer is characterized as comprising at least 30%, preferably more than about 35% by weight of a fraction having a number average molecular weight of greater than 1,000,000, and less than 8% by weight, preferably less than 5% by weight, of a fraction having a number average molecular weight of less than 100,000. The glass transition temperature of the copolymers is generally greater than about -60 °C and more often is greater than about -55 °C. Ranges of -50 °C to -10 °C or 0 °C are also useful.

The copolymer compositions useful in the present invention are copolymers of a 1,3-conjugated diene monomer and an aromatic vinyl monomer. The relative amount of conjugated diene and aromatic vinyl monomers included in the copolymers may be varied over a wide range depending upon the desired copolymer properties. Thus, the amount of conjugated diene in the copolymer may vary from 10 to 90% by weight and the amount of aromatic vinyl compound from 10 to 90% by weight. In one embodiment, the copolymers will comprise from 50 to 80% by weight of the conjugated diene and from 20 to 50% by weight of the aromatic vinyl compound.

According to a preferred embodiment of the present invention, the copolymer comprises from 50 % to 90 % by weight of the conjugated diene and from 10 % to 50 % by weight of the aromatic vinyl compound.

Monomers.

The conjugated diene monomers useful in preparing the copolymers generally are 1,3-dienes, and they contain from 4 to 12 carbon atoms and preferably from 4 to 8 carbon atoms per molecule. Examples of these dienes include the following: 1,3-butadiene, isoprene, 2,3-dimethyl-1,3-butadiene, 1,3-pentadiene (piperylene), 2-methyl-3-ethyl-1,3-butadiene, 3-methyl-1,3-pentadiene, 2-ethyl-1,3-pentadiene, 1,3-hexadiene, 2-methyl-1,3-hexadiene, 1,3-heptadiene, 3-methyl-1,3-heptadiene, 1,3-octadiene, 3-butyl-1,3-octadiene, 3,4-dimethyl-1,3-hexadiene, 3-n-propyl-1,3-pentadiene, 4,5-diethyl-1,3-butadiene, 2,3-di-n-propyl-1,3-butadiene, 2-methyl-3-isopropyl-1,3-butadiene, and the like. Among the dialkyl butadienes, it is preferred that the alkyl groups contain from 1 to 3 carbon atoms. Conjugated dienes containing alkoxy substituents along the chain can also be employed, such as 2-methoxy-1,3-butadiene, 2-ethoxy-3-ethyl-1,3-butadiene, and 2-ethoxy-3-methyl-1,3-hexadiene.

The aromatic vinyl compounds include styrene, 1-vinyl-naphthalene, 2-vinylnaphthalene, and alkyl, cycloalkyl, aryl, alkaryl, aralkyl, alkoxy, aryloxy, and dialkylamino derivatives thereof in which the total number of carbon atoms in the combined substituents is generally not greater than 12. Examples of these aromatic monomers include p-methylstyrene, alpha-methylstyrene, 3,5-diethylstyrene, 4-n-propylstyrene, 2,4,6-trimethylstyrene, 4-dodecylstyrene, 3-methyl-5-n-hexylstyrene, 4-cyclohexylstyrene, 4-phenylstyrene,2-ethyl-4-benzylstyrene,4-p-tolylstyrene,2,3,4,5-tetramethylstyrene,4-(4-phenyl-n-butyl)styrene, 3-(4-n-hexylphenyl)styrene, 4-methoxystyrene, 3,5-diphenoxystyrene, 2,6-dimethyl-4-hexoxystyrene, 4-dimethylaminostyrene, 3,5-diethylaminostyrene, 4-methoxy-6-di-n-propylaminostyrene, 4,5-dimethyl-1-vinylnaphthalene,3-ethyl-1-vinylnaphthalene, 6-isopropyl-1-vinyl-naphthalene, 2,4-diisopropyl-1-vinyl-naphthalene, 3,4,5,6-tetramethyl-1-vinylnaphthalene, 3,6-di-n-hexyl-1-vinyl-naphthalene, 8-phenyl-1-vinyl-naphthalene, 5-(2,4,6-trimethylphenyl)-1-vinylnaphthalene, 3,6-diethyl-2-vinylnaphthalene, 7-dodecyl-2-vinylnaphthalene, 4-n-propyl-5-n-butyl-2-vinylnaphthalene, 6-benzyl-2-vinylnaphthalene, 3-methyl-5,6-diethyl-8-n-propyl-2-vinylnaphthalene, 4-p-tolyl-2-vinylnaphthalene, 5-(3-phenyl-n-propyl)-2-vinylnaphthalene, 4-methoxy-1-vinylnaphthalene, 6-phenoxyl-1-vinylnaphthalene, 3,6-dimethylamino-1-vinylnaphthalene, and the like. Other examples of vinyl substituted aromatic compounds are found in US-A-3,377,404.

Preferred aromatic vinyl compounds include the styrenes, particularly, styrene.

Preferred copolymers are those obtained from 1,3-butadiene, isoprene or piperylene with styrene. More particularly, copolymers of 1,3-butadiene and styrene are preferred.

Catalyst

The copolymers (A-1) useful in the present invention are obtained by polymerizing a 1,3-conjugated diene and an aromatic vinyl compound in the presence of a catalyst which is a trimetalated 1-alkyne. The trimetalated 1-alkyne catalysts are characterized by the formula

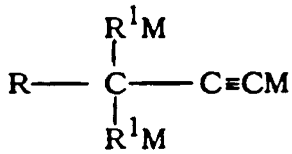 (I)

wherein R is a hydrocarbyl group, M is an alkali metal, $R^1$ is a divalent oligomeric hydrocarbyl group comprising moieties derived from a 1,3-conjugated diene, and the total number moieties derived from a 1,3-conjugated diene in all of the $R^1$ groups in Formula I is from 2 to 30.

The hydrocarbyl group R may be a saturated aliphatic, saturated cycloaliphatic or an aromatic group generally containing up to about 20 carbon atoms. In one embodiment, R is an alkyl group containing from 1 to 15 carbon atoms. In another embodiment, R is an alkyl group containing 1 to 6 carbon atoms. In yet another embodiment, R is an alkyl group containing from about 3 to 9 carbon atoms. M is an alkali metal including lithium, sodium, potassium, rubidium, cesium and francium. Lithium, sodium and potassium are preferred alkali metals, and lithium is the most preferred alkali metal.

The substituent $R^1$ is a divalent oligomeric hydrocarbyl group comprising moieties derived from a 1,3-conjugated diene. The conjugated dienes may be any of a variety of 1,3-conjugated dienes including those containing from 4 to 12 carbon atoms, and preferably from 4 to 8 carbon atoms per molecule. Specific examples of the conjugated dienes include: 1,3-butadiene; isoprene; 2,3-dimethyl-1,3-butadiene; 1,3-pentadiene(piperylene); 2-methyl-3-ethyl-1,3-butadiene; 3-methyl-1,3-pentadiene; 1,3-hexadiene; 2-methyl-1,3-hexadiene; 1,3-heptadiene; 1,3-octadiene; etc. In one preferred embodiment, the moieties of the oligomeric group $R^1$ are derived from 1,3-butadiene, isoprene or piperylene.

The number of moieties derived from a conjugated diene in the $R^1$ groups of the composition of Formula I may be varied over a range of from 2 to about 30. Generally, the total number of moieties derived from a conjugated diene in the two $R^1$ groups in the composition of Formula I is from 3 to 30. In one preferred embodiment, the total number of conjugated diene derived moieties in all of the $R^1$ groups in the composition of Formula I is from 8 to 20. The number of moieties derived from a conjugated diene in the oligomeric groups $R^1$ can be varied to provide compositions of Formula I having a weight average molecular weight of from 200 to 3000. In one preferred embodiment, the weight average molecular weight of the compositions of Formula I is within a range of from 800 to 2000. The hydrocarbon-soluble trimetalated 1-alkyne compositions characterized by Formula I can be obtained by reacting a 1-alkyne containing at least 4 carbon atoms, an organometallic compound R°M, and a conjugated diene at a temperature above about 70°C, wherein the mole ratio of R°M to 1-alkyne is about 3:1. The 1-alkyne may be represented by the formula

$RCH_2C{\equiv}CH$ (II)

wherein R is a hydrocarbyl group. Representative examples of such 1-alkyne compounds include 1-butyne; 1-hexyne; 1-octyne; 1-decyne, 1-dodecyne; 1-hexadecyne; 1-octadecyne; 3-methyl-1-butyne; 3-methyl-1-pentyne; 3-ethyl-1-pentyne; 3-propyl-6-methyl-1-heptyne; 3-cyclopentyl-1-propyne; etc.

The organometallic compound may be represented by the formula R°M wherein R° is a hydrocarbyl group which may be a saturated aliphatic group, a saturated cycloaliphatic group, or an aromatic group. Generally, R° will contain up to about 20 carbon atoms. M is an alkali metal including lithium, sodium, potassium, rubidium, cesium and francium. Representative examples of the organometallic impound R°M include: methylsodium, ethyllithium; propyllithium; isopropylpotassium, n-butyllithium, s-butyllithium; t-butylpotassium; t-butyllithium; pentyllithium; n-amylrubidium; tert-octylcesium; phenyllithium; naphthyllithium; etc. The conjugated dienes which are reacted with the intermediate to form the desired compositions are preferably 1,3-conjugated dienes of the type which have been described above.

In a preferred embodiment, the trimetalated 1-alkyne catalysts are prepared by the method which comprises the steps of

(a) reacting a 1-alkyne with an organometallic compound R°M in a mole ratio of about 1:3 to form an intermediate, and

(b) reacting said intermediate with a conjugated diene at a temperature of at least about 70°C. The mole ratio of conjugated diene to 1-alkyne in the reaction is at least about 2:1 and may be as high as about 30:1. More generally, the ratio will be in the range of from about 8:1 to 20:1.

The reaction of the 1-alkyne with the organometallic compound followed by reaction with the conjugated diene can be carried out in the presence of an inert diluent, and particularly, in the presence of a

hydrocarbon such as an aliphatic, cycloaliphatic or aromatic hydrocarbon. Representative examples of suitable hydrocarbon diluents include n-butane, n-hexane, isooctane, decane, dodecane, cyclohexane, methylcyclohexane, benzene, toluene, xylene, etc. Preferred hydrocarbons are aliphatic hydrocarbons containing from four to about 10 carbon atoms per molecule. Mixtures of hydrocarbons can also be utilized.

The reaction between the 1-alkyne and the organometallic compound to form the intermediate can be effected at temperatures of 20-30 °C, and the reaction is generally conducted in an inert atmosphere such as under nitrogen. The reaction generally is conducted at atmospheric pressure. The intermediate obtained from the first step is a trimetalated alkyne which is either insoluble or only slightly soluble in hydrocarbons.

The reaction between the intermediate and the conjugated diene to form a hydrocarbon soluble product is conducted at a temperature above 70 °C and more generally at a temperature of from 70 °C to 150 °C. The reaction generally is completed in less than about 5 hours, and the reaction results in a change in the color of the solution from a yellow to red or reddish brown. At about 80 °C the reaction is completed in about 3 hours. At higher temperatures, the reaction is completed in less than 3 hours. If the reaction mixture is heated for too long a period, the catalytic activity of the resulting product may be reduced. The product of this reaction is a trimetalated alkyne containing two divalent oligomeric hydrocarbyl groups comprising moieties derived from the conjugated diene. Relatively small amounts of the conjugated diene are reacted with the intermediate in the second step. The mole ratio of conjugated diene to 1-alkyne in the intermediate is at least about 2:1 and may be as high as 30:1. In one preferred embodiment, the mole ratio of conjugated diene to 1-alkyne is in a range of from 8:1 to 20:1.

The trimetalated compounds used in this invention contain active as well as inactive metal. The presence of at least two different types of carbon metal linkages in the compositions of this invention can be shown by both chemical and physical evidence. Gilman titration with allyl bromide distinguishes between metal acetylide (-C≡C-M) which is inactive and other carbon metal linkages (-C-C-M) which are active, J. Organometal Chem., 1 (1963) 8. Titration of the compositions of this invention show about 67% of the total carbon-metal linkages are "active" corresponding to trimetalated alkynes. Ultraviolet and visible spectral studies show peak absorbances at 300-340 NM and 400-450 NM for the compositions of this invention corresponding to inactive and active metal linkages, respectively.

An important property of these catalyst compositions is that they are soluble in hydrocarbon solvents. The terms "soluble in hydrocarbon solvents" and "hydrocarbon soluble" as used herein indicate that the materials (polymer) are soluble in hydrocarbons, particularly aliphatic hydrocarbons such as n-hexane, to the extent of at least about 5 grams of material per 100 grams of solvent at about 25 °C. The solutions are stable in an inert atmosphere at room temperature for an extended period of time.

The following examples illustrate the preparation of the hydrocarbon soluble trimetalated 1-alkyne compositions useful as catalysts in the present invention.

Unless otherwise indicated in the following examples and elsewhere in the specification and claims, all parts and percentages are by weight, temperatures are in degrees centigrade and pressure is at or near atmospheric pressure.

Example A

To a solution of 0.55 ml. of 1-octyne (3.73mM) in dry hexane contained in a 210 ml bottle equipped with rubber liner and three-hole crown cap are charged 7 ml. of n-butyllithium (11.2mM, 1.6M solution) through a disposable syringe at room temperature under nitrogen. The resulting slurry is shaken vigorously to complete the reaction, and the resulting pale yellow solution is allowed to stand at room temperature for one hour. To this solution is charged 25 gms. of 1,3-butadiene in hexane (24.2% butadiene, 112mM butadiene). The mixture is tumbled in a bath heated to about 80 °C for three hours, and the resulting reddish brown solution is cooled and stored. Analysis of the solution obtained in this manner but the Gilman technique indicates active carbon-lithium linkage of 63.6%. The calculated active carbon-lithium linkage based on 1,3,3-trilithio-octyne is 66.7%.

Example B

To a 3.8 l reactor equipped with thermometer, stirrer, heating means, pressure means, inlet and outlet ports are charged 450 g of dry hexane, 436 g (1008mM) of n-butyllithium (1.54M) in hexane, and a solution of 37 g (336.3mM) of 1-octyne in 35 g of dry hexane. The reaction mixture is maintained under a nitrogen atmosphere as the n-butyllithium and octyne are added to the reactor. After the above ingredients are added to the reactor, the mixture is stirred at room temperature for 30 minutes under nitrogen, and 816.5 g of a 1,3-butadiene/hexane blend containing 200 g of 1,3-butadiene are added to the reactor. This mixture is

stirred at 85°C for 120 minutes whereupon a homogeneous reddish-brown solution is obtained. This solution is allowed to cool to room temperature and transferred to storage tank under a nitrogen atmosphere. This solution contains the hydrocarbon-soluble trilithiated 1-alkyne diene treated catalyst useful in this invention. Gilman's titration indicates the presence of 62.34% active carbon-lithium linkages at 0.2628 molarity. The calculated active carbon-lithium linkage is 66.7%.

Two-hundred grams of the catalyst solution is coagulated with excess methanol in the presence of an antioxidant (e.g., 1% di-tertiary-butyl-para cresol). The resulting oily product is dried at 50°C under vacuum. Gel permeation chromatography analysis of the product indicates a 1123 Mw.

Polymerization.

The copolymers useful in the present invention are prepared by polymerizing the conjugated diene and the vinyl aromatic compound in a hydrocarbon solvent in the presence of the above-described trimetalated 1-alkyne catalyst in either a batch or a continuous process. The polymerization temperature may range from 0°C to 160°C or higher, but generally, the polymerization is conducted at a temperature of between 30°C and 150°C for a period of from 10 minutes to 2 or 3 hours. In a preferred embodiment, the batch polymerization is conducted at a temperature in the vicinity of 80°C to 125°C for a period of 15 minutes to one hour. The desired copolymers can be obtained consistently at these relatively high temperatures in a relatively short period of time. Effecting polymerization with about 100% conversion in one hour or less allows for more effective use of labor and equipment which represents a substantial savings in the commercial production of the copolymers. The copolymers may be random or block copolymers, but random copolymers are preferred.

The actual temperature utilized in the polymerization reaction will depend upon the desired polymerization rate, the product desired, and the particular catalyst or catalyst system utilized. The polymerization may be conducted under a negative pressure or an elevated pressure to avoid a loss of monomer and solvent, particularly when the temperatures used are at or above the boiling point of either or both. Also, an inert atmosphere such as nitrogen can be used, and the usual precautions are taken to exclude materials such as water and air that will inactivate or poison the catalyst.

The polymerization reaction is generally conducted in a hydrocarbon solvent or diluent. Various hydrocarbon solvents can be used including aliphatic, cycloaliphatic and aromatic hydrocarbons. In one embodiment, aliphatic hydrocarbons such as hexane and cyclohexane are preferred. Examples of the aliphatic hydrocarbons useful as solvent/diluent in the polymerization reaction generally will contain from 3 to 20 carbon atoms, and more preferably from 5 to 10 carbon atoms. Examples of such aliphatic hydrocarbons include butane, pentane, hexane, heptane, octane, decane, etc. Cycloalkanes containing from 5 to 20 and preferably from 5 to 10 carbon atoms also are useful. Examples of such cycloalkanes include cyclopentane, cyclohexane, methyl cyclohexane, and cycloheptane. Aromatic solvents which may be utilized include benzene, toluene and xylene. Individual diluents can be employed, or combinations of hydrocarbons such as a hydrocarbon distillate fraction may be utilized.

Various compositions, referred to in the art as modifier compositions, can be included in the copolymerization mixture to increase the amount of 1,2-structure in the copolymers. Any of the modifier compositions which have been described in the prior art which will combine with the trimetalated 1-alkyne catalyst of the present invention to produce copolymers having increased amounts of 1,2-structure can be utilized in the method of the present invention.

The amounts of trimetalated 1-alkyne catalyst and the optional modifier(s) utilized in the polymerization reaction are amounts designed to result in the formation of a copolymer having the desired properties described above. The amounts utilized in a particular copolymerization reaction will depend upon a number of factors including the types and amounts of monomers being copolymerized, the desired molecular weight and molecular weight distribution, etc. One of the desirable features of the catalyst used in the method of the invention is that only small amounts of the catalysts are required to produce the desired copolymer, and this results in a cost savings.

The ratio of the catalyst to the weight of the monomers which is employed in the preparation of the copolymers can be expressed as the number of millimoles of active metal in the catalysts based on metal per 100 grams of monomer (PHGM). In the trimetalated 1-alkyne catalyst of the present invention wherein the metals are in the 1,3,3-positions, the metal in the 1-position is inactive whereas the metals in the 3-position are active metals. Generally, the ratio of millimoles of active metal PHGM may range from 0.4 to 0.7. At the higher ratios, the weight average molecular weight of the copolymers of the present invention tends to decrease. Thus, in one preferred embodiment, the ratio of millimoles of active metal PHGM will range from about 0.45 to about 0.65.

The ratio of catalyst to the weight of the monomers can also be expressed in terms of grams of active metal in the catalyst per 100 grams of monomer (PHGM). In such instances the ratio may be in the range of 0.001 to 0.01 and more often, 0.002 to 0.008. In another embodiment the ratio is 0.004 to 0.006.

The term 1,2-units or 1,2-microstructure as used in the present application refers to the mode of addition of a growing polymer chain with a conjugated diene monomer unit. Either 1,2-addition or 1,4-addition can occur. In terms of nomenclature, this results in a 1,2-unit or microstructure for the monomer unit in the polymer chain when 1,3-butadiene is a monomer. When isoprene is the monomer, 3,4-microstructure most generally results with a smaller amount of 1,2-microstructure in the polymer chain. Naming of the polymer structure which results from 1,2-addition is thus dependent on the monomers being polymerized. For simplicity, the term 1,2-unit or 1,2-microstructure is employed to determine the microstructure which results from 1,2-addition of conjugated dienes. The microstructure of the ultra-high molecular weight copolymers of the present invention is determined using proton NMR. The copolymers useful in this invention can be prepared containing relatively high amounts of 1,2 units (vinyl) such as from 10 to 80% by weight of 1,2 units. In one preferred embodiment the copolymers contain from 15 to 50% of 1,2 or vinyl units based on the amount of butadiene incorporated into the copolymer (referred to as "butadiene base"). In another embodiment the copolymers will contain more 1,2-units such as from 60 to 80%.

Batch Process.

The copolymers (A-1) can be prepared in a batch process wherein the monomers, catalyst and solvent (etc.) are placed in a reactor and the mixture is heated to initiate and/or complete the polymerization reaction. Samples may be withdrawn from the reactor periodically during the polymerization reaction to determine percent conversion (by measuring the total solids), color and character of the reaction mass. The reaction time of the polymerization is dependent upon several factors including the polymerization temperature and the catalyst concentration. Generally complete conversion to polymer can be obtained at temperatures of 100 °C in 15 minutes to one hour.

When the polymerization reaction has progressed to the desired degree, the product can be dropped from the reactor or combined with an alcohol such as methanol or isopropanol, or other liquid medium which deactivates the initiator and coagulates and precipitates the polymer product. Generally, an amount of isopropanol equal in weight to the amount of diluent (e.g., hexane) used is sufficient to effect coagulation and precipitation. It is also customary and advantageous to include an antioxidant such as about 1% of di-tertiary butyl paracresol in the isopropanol. The polymer product is recovered and dried to remove solvent.

Continuous Process.

In one embodiment of the present invention, the copolymer is prepared by a continuous process which comprises continuously and separately introducing into a reactor, a 1,3-conjugated diene, an aromatic vinyl compound, an aromatic hydrocarbon solvent and the polymerization catalyst which is a trimetalated 1-alkyne as described above.

According to a preferred embodiment, the conjugated diene and the vinyl aromatic compound are introduced into the reactor as a hydrocarbon solution containing the diene and vinyl aromatic compound. According to a further preferred embodiment, the catalyst is introduced into the reactor as a solution of the catalyst in a hydrocarbon solvent.

As each of the above components is continuously introduced into the reactor, the contents of the reactor are continuously mixed by agitation and the polymerization reaction begins. Since the polymerization reaction is exothermic, the temperature of the mixture within the reactor increases from ambient temperature when the components are Introduced at ambient temperature. The temperature of the mixture within the vessel may be controlled by applying external heat when it is desired to raise the temperature of the mixture, or by cooling if necessary to lower or maintain a given temperature. Generally, the polymerization reactions will occur within the reactor at temperatures of between 30 °C and 150 °C, and more often, the temperature within the reactor will be maintained at between 80 °C to 125 °C. When the mixture comprising the monomers, hydrocarbon solvent, and polymerization catalysts has been in the reactor for the desired period of time to effect the polymerization reaction (residence time), the copolymer thus formed and hydrocarbon solvent are continuously withdrawn from the reactor. The copolymer and hydrocarbon solvent are withdrawn at a rate which is substantially equal to the rate of introduction of the monomer, hydrocarbon solvent and catalyst into the reactor. Residence times of from 20 minutes to one hour at temperatures of 100 °C to 125 °C are generally sufficient to effect polymerization and substantially 100%

conversion of the desired copolymers. The residence time for effecting the desired continuous process for preparing the copolymers is dependent upon such factors as the types and concentrations of the monomers and the catalysts, the temperature within the reactor, etc., and optimum residence time for a particular reaction can be readily determined by one skilled in the art.

Another embodiment is illustrated in Fig. 1 which is a diagrammatical view of a reactor for carrying out a continuous process. In the embodiment illustrated in Fig. 1, a monomer solution comprising a 1,3-conjugated diene and an aromatic vinyl compound dissolved in a hydrocarbon solvent is continuously introduced into reactor 10 at inlet 12 through conduit 11, and a catalyst solution comprising the polymerization catalyst dissolved in a hydrocarbon solvent is introduced into the reactor 10 at inlet 18 through conduit 20. When it is desired to introduce a modifier such as the modifiers described more fully below, into the reactor, the modifier may be introduced directly into reactor 10 at inlet 16 through conduit 14, generally as a solution in a hydrocarbon solvent. Alternatively, the modifier may be introduced into the monomer solution just prior to the introduction of the monomer solution into the reactor 10 by way of conduit 22 through proper adjustment of the two valves (V). The reactor 10 is equipped with means for agitating (not shown) the contents of the reactor as the polymerization reaction proceeds within the reactor. The copolymer which is formed, and the hydrocarbon solvent (and any unreacted components and/or by-products) are continuously withdrawn from reactor 10 at exit 24 through conduit 25 and introduced to storage tanks 30 and 32 through conduits 26 and 28, respectively.

The molecular weights and the dilute solution viscosity (DSV) in toluene of the copolymers reported herein, are determined by usual techniques. The intrinsic viscosity ($\eta$) of the copolymers used in the present invention is determined by the general procedure utilized for DSV except that the intrinsic viscosity is the average of four data points obtained with four different concentrations.

The glass transition temperature (Tg) of the copolymers used in the present invention is determined using a DuPont 1090 thermal analyzer with a 910 Differential Scanning Colorimeter System and following the manufacturer's recommended procedure. The onset, infection and offset temperatures are calculated in accordance with the Interactive DSC Data Analysis-Program V2D.

The relaxation properties of the copolymers used in the present invention are determined using a Bendix Scott STI/200 Mooney Viscometer and a modification of the conventional method for measuring the "shearing viscosity" of rubber and rubber-like materials such as SBR. In this procedure, the sample is placed between the platens which are then closed. The sample is warmed at 100°C for one minute, and the rotor is turned on. After four minutes, the Mooney value ($ML_{1+4}$) is determined and the rotor is turned off. Measurement of the relaxation is begun, and a relaxation time ($AL_{80}$) is recorded when the torque reaches 20% ($T_{80}$) of the Mooney value $ML_{1+4}$. After a total of 10 minutes, the torque is again observed and recorded as $AL_{1+4+5}$, and the platens are opened. The percent relaxation is calculated as follows:

$$\text{Percent relaxation} = \frac{AL_{1+4+5}}{ML_{1+4}} \times 100$$

A typical graph of the torque versus time for this test procedure is shown in the drawing wherein the various values utilized in computation of percent relaxation such as $ML_{1+4}$ and $AL_{1+4+5}$ are noted. In general, the copolymers used in the present invention are characterized by a percent relaxation as defined above of from about 20% to about 80%. More often, the percent relation will be between about 30 or even 40% and about 70%.

The following examples illustrate the copolymers useful in the present invention and methods for their preparation.

Unless otherwise indicated in the following examples and elsewhere in the specification and claims, values for number average molecular weight (Mn) and weight average molecular weight (Mw) are determined in tetrahydrofuran using GPC as described above. The microstructure of the copolymers (e.g., 1,4 units, 1,2 units, etc., is determined utilizing proton NMR in carbon disulfide.

Examples 1-5

To a 7.6 l stainless steel reactor equipped with thermometer, stirrer, heating means, pressure means, inlet and outlet ports which is maintained under a nitrogen atmosphere, a styrene/butadiene/hexane blend as described in Table I is charged along with 19 ml. of a one normal solution of 2,2'-di(tetrahydrofuryl)

propane in hexane (modifier), and 3.8 mM of the uncoagulated catalyst solution of Example B. The temperature of the mixture within the reactor is raised from room temperature to 100 °C. The polymerization is conducted under the conditions listed in Table I. The resulting copolymer is coagulated with excess of isopropanol containing about 1% of di-tertiary butyl-para-cresol followed by drum drying. The copolymer obtained in each example and its properties are shown in Table I.

TABLE I

| | 1 | 2 | 3 | 4 | 5 |
|---|---|---|---|---|---|
| STY./Bd/HEX.,(g) | 4123 | 4123 | 4122 | 4122 | 4110 |
| % Total Solid | 19.4 | 19.4 | 19.3 | 19.3 | 19.3 |
| STY., Wt.% | 45.0 | 45.0 | 40.2 | 40.2 | 35.2 |
| Bd., Wt.% | 55.0 | 55.0 | 59.8 | 59.8 | 64.8 |
| Catalyst | | | | | |
| Active Li* | 0.476 | 0.476 | 0.476 | 0.476 | 0.479 |
| Polymerization Conditions | | | | | |
| Modif./Active Li | 2.5:1 | 2.5:1 | 2.5:1 | 2.5:1 | 2.5:1 |
| Init. Temp. (°C) | 25 | 25 | 25 | 25 | 25 |
| Set Temp. (°C) | 100 | 100 | 100 | 100 | 110 |
| Max. Temp. (°C) | 123 | 118 | 128 | 130 | 146 |
| Pzn. Time (Min.) | 60 | 60 | 60 | 60 | 60 |
| % Conversion | ---------≧ 97.0%------------ | | | | |
| Physical Properties | | | | | |
| DSV in Toluene | 4.02 | 3.65 | 3.35 | 4.25 | 4.23 |
| % Gel | 0.00 | 0.00 | 0.00 | 0.00 | 0.00 |
| $(\eta)_{THF}$ | 5.08 | 4.38 | 4.08 | 5.45 | 5.49 |
| Mn($x10^{-4}$) | 45.6 | 44.1 | 42.6 | 47.4 | 36.3 |
| Mw($x10^{-4}$) | 161.3 | 149.1 | 136.3 | 159.5 | 135.1 |
| Mw/Mn | 3.53 | 3.38 | 3.20 | 3.37 | 3.72 |
| Microstructure | | | | | |
| % 1,4 units | 18.9 | 21.3 | 21.4 | 21.5 | 28.0 |
| % 1,2 units | 32.9 | 31.0 | 36.6 | 35.8 | 33.9 |
| % 1,2 (Bd Base) | 63.5 | 59.3 | 63.1 | 62.5 | 54.8 |
| % STY. | 48.2 | 47.7 | 42.0 | 42.7 | 38.0 |
| % Block STY. | 0.0 | 0.0 | 0.0 | 0.0 | 0.0 |
| Tg (°C) | -16.6 | -16.7 | -21.5 | -21.0 | -27.7 |

* Millimoles of Li per hundred grams of monomer.

Example 6

To a 7.6 l stainless steel reactor equipped with thermometer, stirrer, heating means, pressure means, inlet and outlet ports which is maintained under a nitrogen atmosphere, there are charged 4190 grams of a styrene/butadiene/hexane blend containing 155.3 grams of styrene and 622.3 grams of 1,3-butadiene, 9.25 ml. of a 1 Normal solution of 2,2'-di(tetrahydrofuryl) propane in 20 ml. of hexane, and 17.5 ml. of a freshly prepared catalyst solution as described in Example B (0.211 molar solution in hexane). The polymerization is conducted at 100 °C for 60 minutes. The resulting copolymer is dropped into a 19 l container equipped with polyethylene liner and containing two gallons of hexane, about 1% of di-tertiary butyl-para-cresol and 25 ml. of a short-stop. The physical properties of the polymer prepared in this manner are summarized in the following Table II.

TABLE II

| | |
|---|---|
| $ML_{1+4}$ (@ 100 ° C) | >200 |
| GPC Analysis | |
| Mn (x $10^{-4}$) | 44.5 |
| Mw (x $10^{-4}$) | 111.4 |
| Mw/Mn | 2.5 |
| $[\eta]_{THF}$ | 7.55 |
| DSV | 6.72 |
| % Gel | 0.00 |
| Wt.% Styrene | 21.6 |
| Wt.% Block Styrene | 0.00 |
| Wt.% 1,2 (Bd Base) | 46.0 |
| Tg (° C) | -49.9 |

Example 7

The procedure of Example 6 is substantially repeated except that the amounts of styrene and 1,3-butadiene are varied. The characteristics of the copolymer obtained In Example 7 and four prior art SBR polymers are shown in Table III. Controls -1 and -2 are solution SBRs, Control-3 is an emulsion SBR commercially available from Ameripol under the designation E-1500, and Control-4 is a tin-coupled solution SBR.

TABLE III

| Copolymer | Example 7 | Control-1 | Control-2 | Control-3 | Control-4 |
|---|---|---|---|---|---|
| Wt % Styrene | 25.4 | 22.4 | 21.2 | 22.9 | 20.6 |
| Wt % 1,4-units | 41.3 | 32.5 | 44.8 | 60.9 | 33.5 |
| Wt % 1,2-units (Bd base) | 33.3 | 45.0 | 32.9 | 16.2 | 45.9 |
| Mw (X$10^{-4}$) | 120.7 | 26.4 | 71.34 | 38.04 | 27.96 |
| Mn (X$10^{-4}$) | 42.54 | 16.9 | 24.0 | 8.07 | 16.94 |
| $[\eta]$THF | 4.33 | 1.9 | 3.01 | 2.08 | 2.37 |
| Tg(° C) | -55.9 | -34.7 | -42.3 | -55.2 | -35.3 |

Example 8

The continuous polymerization of this example is conducted in a 24.6 l stirred tank reactor with a lint to diameter ratio of about 3:1. The reactor is equipped in a manner similar to that illustrated in Fig. 1. A purified blend containing 65% of 1,3-butadiene and 35% styrene in hexane (15.0% total solids) is metered continuously into the reactor. Just prior to entering the reactor, a dilute solution of 2,2'-(tetrahydrofuryl) propane in hexane (modifier) is introduced into the monomer stream. The concentration of the modifier in the hexane is 0.92 g/100cc of hexane. A solution of the freshly prepared catalyst as described in Example B in hexane also is metered continuously into the reactor at a rate to provide 0.0046 gram of active lithium per 100 grams of monomer (PHGM). The continuous polymerization is carried out at a temperature of about 100 ° C with a 45 minute residence time. The resulting copolymer solution is continuously withdrawn from the reactor and recovered. A portion of the copolymer solution thus obtained is coagulated with an excess of isopropanol containing about 1% of ditertiary butyl-para-cresol followed by drum drying. The copolymers obtained in 100% yield and is found to have the following characteristics: $[\eta]_{THF}$ = 4.16; Mn = 293,971; Mw = 1,101,946; Mw/Mn = 3.75; fraction of copolymer having Mn <$10^6$ = 41% and fraction having Mn <$10^5$ = 6.7%; Tg -29 ° C; $ML_{1+4}$ and $MS_{1+4}$ at 100 ° C = >200; $T_{80}$ = >300 seconds; microstructure: styrene content 35.9%; block styrene = 0%; 1,4 units = 34.1%; 1,2 units = 30.0%; and 1,2 units (butadiene base) = 46.8%.

Examples 9-13

The general procedure of Example 8 is repeated with the following exceptions which are shown specifically in the following Table IV: amount of catalyst; molar ratio of modifier to active lithium; total solids in monomer blend; and ratio of styrene:butadiene in monomer blend. The polymerization conditions and the properties of the copolymers obtained in the examples are also shown in Table IV.

TABLE IV

| | Examples | | | | |
|---|---|---|---|---|---|
| | 9 | 10 | 11 | 12 | 13 |
| STY./Bd/HEX., Feed % Total Solid | 17.0 | 17.0 | 15.5 | 15.5 | 15.0 |
| STY., Wt.% | 30.0 | 30.0 | 30.0 | 35.0 | 35.0 |
| Bd., Wt.% | 70.0 | 70.0 | 70.0 | 65.0 | 65.0 |
| Catalyst | | | | | |
| Active Li* | 0.0059 | 0.0051 | 0.0050 | 0.0046 | 0.0046 |
| Polymerization Conditions | | | | | |
| Modifier/Active Li (moles) | 0.13 | 0.13 | 0.12 | 0.15 | 1.0 |
| Polym. Temp. (°C) | 117 | 120 | 112 | 105 | 108 |
| Residence Time (Min.) | 45 | 45 | 45 | 45 | 45 |
| % Conversion | 100 | 100 | 100 | 100 | 100 |
| Physical Properties | | | | | |
| $[\eta]_{THF}$ | 2.48 | 2.84 | 3.42 | 4.23 | 4.90 |
| $Mw(x10^{-4})$ | 47.4 | 58.9 | 70.3 | 94.5 | 122.5 |
| Mw/Mn | 2.80 | 3.13 | 2.81 | 4.44 | 4.30 |
| $ML_{1+4}$ @ 100°C | 105.8 | 149.0 | >200 | >200 | >200 |
| Microstructure | | | | | |
| % 1,2 (Bd Base) | 21.2 | 23.9 | 19.5 | 30.8 | 42.7 |
| % STY. | 30.8 | 30.9 | 30.7 | 34.8 | 35.3 |
| Tg (°C) | -65.2 | -65.4 | -65.0 | -55.7 | -32.3 |
| Polymer Relaxation | | | | | |
| $T_{80}$ (sec.) | 10.0 | 37.0 | >300 | >300 | >300 |
| % Relaxation | 3.3 | 12.6 | 22.1 | 46.0 | 34.0 |

* gms per hundred grams of monomer; amount varied to account for impurities in monomer blend as determined with Micheler's ketone.

(A-2) Natural Rubber

The elastomer component used in the tires of the present invention also contain at least one natural rubber. Natural rubbers include hevea and guayule rubber. Mixtures of natural rubbers may also be used in this invention.

The elastomer mixture of the vulcanizable elastomer compositions of the present invention may also contain one or more synthetic rubbers in addition to the ultra-high molecular weight copolymer (A-1). Examples of synthetic rubbers include rubber-like polymers produced by polymerizing aliphatic, conjugated diolefins, especially those containing 4 to 8 carbon atoms such as butadiene, isoprene pentadienes, etc. The rubbers contain unsaturated carbon chains, and such rubbers are known in the art as shown by ANSI/ASTM Standard D1418-79A where these rubbers are referred to as R rubbers. The following is a non-exclusive list of R class rubbers which can be used in the elastomer mixture (A) of this invention.

ABR - Acrylate-butadiene

BR - Butadiene

CIIR - Chloro-isobutene-isoprene
CR - Chloroprene
IR - Isoprene, synthetic
NBR - Nitrile-butadiene
NCR - Nitrile-chloroprene
NIR - Nitrile-isoprene
SCR - Styrene-chloroprene
SIR - Styrene-isoprene rubbers

(B) Carbon Black.

Carbon black fillers which may be included in the vulcanizable elastomers useful in this invention include any of the commonly available, commercially-produced carbon blacks but those having a surface area (EMSA) of at least 7 $m^2/g$ and more preferably at least 35 $m^2/g$ up to 200 $m^2/g$ or higher are preferred. In one preferred embodiment the surface area of the carbon black is at least 80 $m^2/g$. Surface area values used in this application are those determined by ASTM test D-1765 using the cetyl-trimethyl-ammonium bromide (CTAB) technique. Among the useful carbon blacks are furnace black, channel blacks and lamp blacks. More specifically, examples of the carbon blacks include super abrasion furnace (SAF) blacks, high abrasion furnace (HAF) blacks, fast extrusion furnace (FEF) blacks, fine furnace (FF) blacks, intermediate super abrasion furnace (ISAF) blacks, semi-reinforcing furnace (SRF) blacks, medium processing channel blacks, hard processing channel blacks and conducting channel blacks. Other carbon blacks which may be utilized include acetylene blacks. Mixtures of two or more of the above blacks can be used in preparing the carbon black products of the invention. Typical values for surface areas of usable carbon blacks are summarized in the following Table V.

TABLE V

| Carbon Blacks | |
|---|---|
| ASTM Designation (D-1765-82a) | Surface Area ($m^2/g$) (D-3765) |
| N-110 | 126 |
| N-220 | 111 |
| N-339 | 95 |
| N-330 | 83 |
| N-550 | 42 |
| N-660 | 35 |

High surface area, small particle size, high structure carbon blacks are preferred for use in the high performance tread compounds of this invention. Surface areas of at least 80 $m^2/g$ up to 140 $m^2/g$ are preferred in one embodiment. Examples of such blacks include SAF (N100-N199), ISAF (N200-N299) and FAF (N300-N399) blacks. Those carbon blacks designated HAF-HS and ISAF-HS are particularly useful.

Another measure of surface area is iodine adsorption as determined by ASTM D1510. Structure of carbon blacks is assessed by DBP absorption according to ASTM D2414. Carbon blacks having iodine numbers of 170-190 mg/g and DBP absorption value of 130-160 cc/100g are preferred in ultra-high performance tire treads. An example of such a carbon black is HV-3396 from Witco Chemical which has an iodine number of about 185 and a DBP of about 140-145.

The carbon blacks may be in pelletized form or an unpelletized flocculent mass. Preferably, for more uniform mixing, unpelletized carbon black is preferred.

The vulcanizable elastomer compositions of the invention generally may contain from 25 to 250 parts of carbon black per 100 parts of the elastomer mixture (A). Loadings of from 25 to 150 or 25 to 75 parts of carbon black per 100 parts of elastomer mixture (A) are often used to obtain desirable properties.

The elastomer compositions comprising the blends of copolymer, natural rubber, and carbon black can be prepared by any of the techniques known to those skilled in the art. For example, the blends can be prepared on roll mills or in internal mixers such as a Banbury mixer.

When curing agents are mixed with the elastomer compositions, they may be conventional types such as sulfur- or peroxide-based curing systems. They are used in conventional amounts and incorporated in the uncured compositions of the invention by known techniques and procedures. Fillers (in addition to

carbon black) may be, and often are present as is known to those skilled in the art. Typical fillers include glass, talc, silica ("white carbon black"") and similar finely divided mineral materials. In addition to the fillers, other materials normally used in conventional rubber formulations such as antioxidants, accelerators, retarders, promoters and softeners such as aromatic oil, naphthenic oil or paraffinic oil may be incorporated into the vulcanizable elastomer compositions used to prepare tire treads.

The vulcanizable (curable) compositions containing the elastomer compositions can be prepared by conventional techniques using various types of mills, blenders and mixers known in the art. The cured compositions can be made by the same techniques followed by curing.

The temperature used in formulating the rubber compositions of this invention range from ambient to those normally used in the art such as 75-175° or even higher depending upon a particular modified rubber composition being processed. Because of the shear forces involved in formulating the rubber compositions, the formulation process is exothermic and high temperatures are normal.

A general and a typical compounding recipe for preparing the vulcanizable elastomer compositions useful in preparing the heavy-duty tire treads of this invention are shown in the following Table VI.

TABLE VI

| Compounding Recipe | | |
|---|---|---|
| Ingredient | PHR | |
| | General | Typical |
| Elastomer | | |
| Copolymer (A-1) | 10 - 90 | 45 |
| Natural Rubber | 95 -10 | 55 |
| Carbon Black | 50 - 250 | 50 |
| Stearic Acid | 1 - 5 | 2 |
| Zinc Oxide | 3 - 10 | 3 |
| Antioxidant | 1 - 3 | 2 |
| Sulfur | 0.5 - 5 | 1.5 |
| Accelerator | 0.5 - 5 | 1.5 |

The tire tread vulcanizates of the present invention are made by vulcanizing a mixture comprising at least one of the elastomer compositions of the invention, fillers, conventional curing systems and agents such as sulfur, antioxidants, accelerators, retarders, coupling agents, promoters, etc. The vulcanizates are prepared by curing these compositions under conditions of temperature and time customarily used in the art. Typically, the elastomer composition including carbon black and other fillers are mixed, the sulfur and accelerators are added, and the mixture is cured. Other mixing sequences can be used, but it is essential to have the copolymer and carbon black product intimately combined before vulcanization.

The following examples illustrate the preparation of curable and cured elastomer compositions useful in preparing the tire treads of the present invention. An internal mixer such as a Brabender or small size Banbury, and a roll mill are used to prepare the uncured rubber formulations in accordance with techniques well known to those skilled in the art.

The Lambourn abrasion resistance of the elastomer compositions may be evaluated in the laboratory in the following manner:

First, a time at which the torque of the elastomer composition takes the maximum value is measured by a rheometer, and vulcanization is carried out for a time 1.2 times as long as thus measured time. Then, the Lambourn abrasion of the vulcanized elastomer composition is evaluated at a given wear rate (e.g., 25%) under load of 4.5 kg, and shown by index taking a value a Control as 100. The larger the index, the better the Lambourn abrasion resistance.

Example I, and Controls 5-8

Vulcanizable elastomers containing carbon black but no oil are prepared in accordance with the recipes of Table VII. The amounts are in parts phr.

TABLE VII

| | Example I | Control-5 | Control-6 | Control-7 | Control-8 |
|---|---|---|---|---|---|
| Natural Rubber | 55 | 55 | 55 | 55 | 55 |
| Copolymer of Ex.7 | 45 | -- | -- | -- | -- |
| Copolymer Control-1 | -- | 45 | -- | -- | -- |
| Copolymer Control-2 | -- | -- | 45 | -- | -- |
| Copolymer Control-3 | -- | -- | -- | 45 | -- |
| Copolymer Control-4 | -- | -- | -- | -- | 45 |
| Carbon Black | 50 | 50 | 50 | 50 | 50 |
| Zinc Oxide | 3.0 | 3.0 | 3.0 | 3.0 | 3.0 |
| Stearic Acid | 2.0 | 2.0 | 2.0 | 2.0 | 2.0 |
| Accelerator | 1.5 | 1.5 | 1.5 | 1.5 | 1.5 |
| Sulfur | 1.2 | 1.2 | 1.2 | 1.2 | 1.2 |

The compounded mixtures are cured at 160 ° C for 20 minutes. Some properties of the cured compositions are summarized in Table VIII.

Table VIII

| Properties | Example I | Control-5 | Control-6 | Control-7 | Control-8 |
|---|---|---|---|---|---|
| Tests at Room Temp. | | | | | |
| Shore A Hardness | 63 | 65 | 63 | 62 | 63 |
| Tensile ($N/mm^2$) | 24.7 | 22.8 | 24.0 | 23.1 | 24.3 |
| 300% Modulus ($N/mm^2$) | 10.6 | 8.7 | 9.5 | 8.8 | 9.2 |
| 25% Wear* | 107 | 89 | 98 | 100 | 97 |
| 60% Wear* | 117 | 90 | 102 | 100 | 95 |
| Tests at 100 ° C | | | | | |
| Shore A Hardness | 63 | 65 | 63 | 62 | 63 |
| Tensile ($N/mm^2$) | 16.4 | 15.0 | 15.6 | 16.2 | 15.7 |
| 300% Modulus ($N/mm^2$) | 7.0 | 5.6 | 6.4 | 5.8 | 6.0 |

* Lambourn Abrasion Index; Control-7 used as index of 100.

Examples II, IIIand Control-9

Vulcanizable elastomers are prepared with the copolymers of Examples 9 and 10 prepared by the continuous process in accordance with the recipes of Table VIII (parts phr). Control-9 is a similar composition but using an SBR with an Mw of 75.05 • $10^{-4}$ which is prepared with n-butyl lithium as the catalyst.

TABLE VIII

| | Example II | Example III | Control-9 |
|---|---|---|---|
| Natural Rubber | 55 | 55 | 55 |
| Copolymer of Ex. 11 | 45 | -- | -- |
| Copolymer of Ex. 10 | -- | 45 | -- |
| SBR Control | -- | -- | 45 |
| Carbon Black | 50 | 50 | 50 |
| Zinc Oxide | 3.0 | 3.0 | 3.0 |
| Stearic Acid | 2.0 | 2.0 | 2.0 |
| Accelerator | 1.5 | 1.5 | 1.5 |
| Sulfur | 1.5 | 1.5 | 1.5 |

The compounded mixtures are cured at 160°C for 20 minutes. Some properties of the cured compositions are summarized in Table IX.

TABLE IX

| Properties | Example II | Example III | Control-9 |
|---|---|---|---|
| Tests at Room Temp. | | | |
| Shore A Hardness | 69.0 | 68.0 | 66.0 |
| Tensile ($N/mm^2$) | 29.0 | 30.0 | 27.9 |
| 300% Modulus ($N/mm^2$) | 8.7 | 8.4 | 8.1 |
| Tests at 100°C | | | |
| Shore A Hardness | 62.0 | 62.0 | 58.0 |
| Tensile ($N/mm^2$) | 18.7 | 17.6 | 16.0 |
| 300% Modulus ($N/mm^2$) | 6.4 | 6.3 | 6.0 |

Among the desirable and beneficial properties which may be obtained with tire treads made with the vulcanized elastomer compositions containing the copolymers described herein are high tensile strength and hardness, resistance to heat build-up, and increased wear and traction. The vulcanizable and vulcanized elastomer compositions based on the use of the above copolymers and natural rubber can be molded or shaped to the desired tire treads by known techniques. The tread can be applied during the building of the green tire in which an uncured, shaped tread of the formulation of the present invention is built into the carcass following which the green tire is shaped and cured. Alternatively, the tread can be applied to a cured tire carcass from which the previous tread has been buffed or abraded away and the uncured, shaped tread of the present invention cured thereon as a retread. Tires having at least the tread portion made of the filled and vulcanized elastomer of the invention provide very high performance particularly in respect of the road gripping ability and, furthermore, possesses very good balance between the hysteresis loss value as an indication of the road gripping ability and other important characteristics such as rupture strength, heat resistance and wear resistance which are required for tires to be used under heavy-duty conditions.

As tire tread material, the elastomer compositions of the invention are useful in high performance tires for specialized utilities and for general purposes. The invention is applicable particularly to radial tires wherein at least the tread portion is made of the filled and vulcanized elastomer compositions described herein. The radial tires can be used for trucks, buses and very large construction vehicles, and the radial tires of the present invention exhibit good load-bearing ability and improved durability and cut-resistance.

**Claims**

**1.** A pneumatic tire for heavy-load vehicles wherein at least the tread portion of said tire is prepared from a vulcanizable elastomer composition comprising, as the elastomer component, an elastomer mixture comprising from 10% to 90% by weight of a gel-free copolymer composition of a 1,3-conjugated diene and an aromatic vinyl compound, and from 10% to 90% of natural rubber wherein the copolymer

composition has a weight average molecular weight of greater than about 100,000 and the copolymer is obtained by polymerizing a conjugated diene and an aromatic vinyl compound in the presence of a catalyst comprising a trimetalated 1-alkyne obtained by reacting, at a temperature above about 70°C, a 1-alkyne containing at least 4 carbon atoms, an organometallic compound R°M and a 1,3-conjugated diene wherein, the alkyne is characterized by the formula

$RCH_2C{\equiv}CH$ (II)

wherein R is an alkyl group, R° is a hydrocarbyl group, M is an alkali metal, the mole ratio of R°M to 1-alkyne is about 3:1, and the mole ratio of conjugated diene to 1-alkyne is from 2:1 to 30:1.

**2.** The tire of claim 1 wherein the alkali metal M is lithium.

**3.** The tire of claim 1 wherein R is an alkyl group containing from 1 to about 15 carbon atoms.

**4.** The tire of claim 1 wherein the copolymer is obtained by a continuous polymerization process.

**5.** The tire of claim 1 wherein the weight average molecular weight of the copolymer is greater than about 900,000.

**6.** The tire of claim 1 wherein the copolymer comprises from 50% to 90% by weight of the conjugated diene and from 10% to 50% by weight of the aromatic vinyl compound.

**7.** The tire of claim 1 wherein the copolymer is prepared by a continuous process which comprises:

(A-1-a) continuously Introducing into a reactor, a 1,3-conjugated diene, an aromatic vinyl compound, a hydrocarbon solvent and a polymerization catalyst comprising a trimetalated 1-alkyne wherein the catalyst is obtained by reacting at a temperature of above about 70°C, a 1-alkyne containing at least 4 carbon atoms, an organo metallic compound, R°M and a 1,3-conjugated diene wherein the alkyne is characterized by the formula

$RCH_2C{\equiv}CH$ (II)

wherein R is an alkyl group, R° is a hydrocarbyl group, M is an alkali metal, the mole ratio of R°M to 1-alkyne is about 3:1, and the mole ratio of conjugated diene to 1-alkyne is from 2:1 to 30:1;

(A-1-b) continuously agitating the contents of the reactor while effecting the polymerization reaction to form the copolymer; and

(A-1-c) continuously withdrawing the copolymer from the reactor.

**8.** The tire of claim 7 wherein the contents of the reactor are maintained at a temperature of 30° to 150°C.

**9.** The tire of claim 7 wherein the conjugated diene and the vinyl aromatic compound are introduced into the reactor as a hydrocarbon solution containing the diene and vinyl aromatic compound.

**10.** The tire of claim 7 wherein the catalyst is introduced into the reactor as a solution of the catalyst in a hydrocarbon solvent.

**11.** The tire of claim 1 also containing from 25 to 250 parts by weight of carbon black per 100 parts of elastomer mixture.

**12.** A pneumatic tire for heavy-load vehicles wherein at least the tread portion of said tire is prepared from a vulcanizable elastomer composition comprising:

(A) as the elastomer component, an elastomer mixture comprising:

(A-1) from 10% to 90% by weight of a gel-free copolymer composition of at least one 1,3-conjugated diene selected from the group consisting of 1,3-butadiene, isoprene or piperylene and a styrene compound wherein the copolymer has a weight average molecular weight of at least about 100,000 and is prepared by polymerizing the 1,3-conjugated diene and the vinyl aromatic compound in a hydrocarbon solvent in the presence of a trimetalated 1-alkyne catalyst which

comprises the reaction product of a 1-alkyne containing at least 4 carbon atoms, an organometallic compound R°M and a 1,3-conjugated diene prepared at a temperature of at least about 70°C, and wherein R° is an aliphatic or cycloaliphatic group, M is an alkali metal, the mole ratio of R°M to 1-alkyne is about 3:1, and the mole ratio of conjugated diene to 1-alkyne is from 2:1 to 30:1; and

(A-2) from 10% to 90% by weight of at least one natural rubber; and

(B) from 25 to 150 parts by weight per 100 parts of elastomer mixture (A) of at least one reinforcing carbon black.

**13.** The tire of claim 12 wherein the copolymer (A-1) comprises from 50 to 80% by weight of 1,3-butadiene and 20% to 50% of the styrene compound.

**14.** The tire of claim 12 wherein the weight average molecular weight of the copolymer (A-1) is at least about 900,000.

**15.** The tire of claim 12 wherein the copolymer (A-1) is prepared by a continuous process which comprises:

(A-1-a) continuously introducing into a reactor, the conjugated diene, the styrene compound, a hydrocarbon solvent and a trimetalated 1-alkyne catalyst which comprises the reaction product of a 1-alkyne containing at least 4 carbon atoms, an organolithium compound and an aliphatic 1,3-conjugated diene at a temperature of at least 70°C wherein the mole ratio of organolithium to 1-alkyne is about 3:1 and the mole ratio of conjugated diene to 1-alkyne is from 2:1 to 30:1.;

(A-1-b) continuously agitating the contents of the reactor while maintaining the temperature within the reactor between 75° and 125°C to form the copolymer; and

(A-1-c) continuously withdrawing copolymer and hydrocarbon solvent from the reactor.

**16.** The tire of claim 15 wherein the conjugated diene and the vinyl aromatic compound are introduced into the reactor as a hydrocarbon solution containing the diene and the vinyl aromatic compound.

**17.** The tire of claim 15 wherein the conjugated diene is 1,3-butadiene, and the styrene compound is styrene.

**18.** A pneumatic tire for heavy load vehicles wherein at least the tread portion of said tire is prepared from a vulcanizable elastomer composition comprising, as the elastomer component, an elastomer mixture comprising from 10% to 90% by weight of an ultra-high molecular weight gel-free copolymer composition of a 1,3-conjugated diene and an aromatic vinyl compound wherein the copolymer composition has a weight average molecular weight of greater than about 900,000, and from 10% to 90% of natural rubber.

**19.** The tire of claim 18 wherein the weight average molecular weight of the ultra-high molecular weight copolymer is greater than about 1,100,000.

**20.** The tire of claim 18 wherein the copolymer comprises from 50% to 90% by weight of the conjugated diene and from 10% to 50% by weight of the aromatic vinyl compound.

**21.** The tire of claim 18 wherein the conjugated diene is 1,3-butadiene, isoprene or piperylene.

**22.** The tire of claim 18 wherein the aromatic vinyl compound is a styrene.

**23.** The tire of claim 18 wherein the elastomer mixture comprises 30% to 60% by weight of the ultra-high molecular weight copolymer and 40% to 70% by weight of natural rubber.

**24.** The tire of claim 18 wherein the vulcanizable elastomer composition also contains from 25 to 250 parts by weight of carbon black per 100 parts of elastomer mixture.

## Patentansprüche

1. Pneumatischer Reifen für Schwerlastfahrzeuge, bei dem mindestens die Lauffläche des Reifens aus einer vulkanisierbaren elastomeren Masse hergestellt ist, welche als Elastomerkomponente ein Elastomergemisch umfaßt, das 10 bis 90 Gew.-% einer gelfreien Copolymermasse aus einem 1,3-konjugierten Dien und einer aromatischen Vinylverbindung und 10 bis 90 % Naturkautschuk enthält, wobei die Copolymermasse ein gewichtsmittleres Molekulargewicht von mehr als etwa 100.000 hat und das Copolymere durch Polymerisation eines konjugierten Diens mit einer aromatischen Vinylverbindung in Gegenwart eines Katalysators erhalten worden ist, der ein trimetallisiertes 1-Alkin umfaßt, das durch bei einer Temperatur oberhalb etwa 70 °C erfolgende Umsetzung eines 1-Alkins mit mindestens 4 Kohlenstoffatomen einer metallorganischen Verbindung R°M und eines 1,3-konjugierten Diens erhalten worden ist, wobei das Alkin durch die Formel

   $RCH_2CH{\equiv}CH$ (II)

   angegeben wird, worin R eine Alkylgruppe bedeutet, R° eine Hydrocarbylgruppe bedeutet und M ein Alkalimetall bedeutet, wobei das Molverhältnis von R°M zu 1-Alkin etwa 3:1 ist und das Molverhältnis von konjugiertem Dien zu 1-Alkin 2:1 bis 30:1 ist.

2. Reifen nach Anspruch 1, dadurch **gekennzeichnet,** daß das Alkalimetall M Lithium ist.

3. Reifen nach Anspruch 1, dadurch **gekennzeichnet,** daß R eine Alkylgruppe mit 1 bis etwa 15 Kohlenstoffatomen ist.

4. Reifen nach Anspruch 1, dadurch **gekennzeichnet,** daß das Copolymere durch ein kontinuierliches Polymerisationsverfahren erhalten worden ist.

5. Reifen nach Anspruch 1, dadurch **gekennzeichnet,** daß das gewichtsmittlere Molekulargewicht des Copolymeren größer als etwa 900.000 ist.

6. Reifen nach Anspruch 1, dadurch **gekennzeichnet,** daß das Copolymere 50 bis 90 Gew.-% konjugiertes Dien und 10 bis 50 Gew.-% aromatische Vinylverbindung enthält.

7. Reifen nach Anspruch 1, dadurch **gekennzeichnet,** daß das Copolymere durch ein kontinuierliches Verfahren erhalten worden ist, das folgendes umfaßt:
   (A-1-a) kontinuierliche Einführung eines 1,3-konjugierten Diens, einer aromatischen Vinylverbindung, eines Kohlenwasserstofflösungsmittels und eines Polymerisationskatalysators, umfassend ein trimetallisiertes 1-Alkin in einen Reaktor, wobei der Katalysator durch bei einer Temperatur von oberhalb etwa 70 °C erfolgende Umsetzung eines 1-Alkins mit mindestens 4 Kohlenstoffatomen, einer metallorganischen Verbindung, R°M und eines 1,3-konjugierten Diens erhalten worden ist, wobei das Alkin durch die Formel

   $RCH_2CH{\equiv}CH$ (II)

   angegeben wird, worin R eine Alkylgruppe bedeutet, R° eine Hydrocarbylgruppe bedeutet und M ein Alkalimetall bedeutet, wobei das Molverhältnis von R°M zu 1-Alkin etwa 3:1 ist und das Molverhältnis von konjugiertem Dien zu 1-Alkin 2:1 bis 30:1 ist;
   (A-1-b) kontinuierliche Durchbewegung des Reaktorinhalts unter Bewirkung der Polymerisationsreaktion, um das Copolymere zu bilden; und
   (A-1-c) kontinuierliches Abziehen des Copolymeren aus dem Reaktor.

8. Reifen nach Anspruch 7, dadurch **gekennzeichnet,** daß der Reaktorinhalt auf einer Temperatur von 30° bis 150 °C gehalten worden ist.

9. Reifen nach Anspruch 7, dadurch **gekennzeichnet,** daß das konjugierte Dien und die vinylaromatische Verbindung in den Reaktor als Kohlenwasserstofflösung, die das Dien und die vinylaromatische Verbindung enthält, eingeführt worden sind.

**10.** Reifen nach Anspruch 7, dadurch **gekennzeichnet,** daß der Katalysator in den Reaktor als Lösung des Katalysators in einem Kohlenwasserstofflösungsmittel eingeführt worden ist.

**11.** Reifen nach Anspruch 1, dadurch **gekennzeichnet,** daß er weiterhin 25 bis 250 Gewichtsteile Ruß pro 100 Teile Elastomergemisch enthält.

**12.** Pneumatischer Reifen für Schwerlastfahrzeuge, bei dem mindestens der Laufflächenteil des Reifens aus einem vulkanisierbaren Elastomermasse hergestellt ist, welche folgendes umfaßt:

(A) als Elastomerkomponente ein Elastomergemisch, enthaltend:

(A-1) 10 bis 90 Gew.-% einer gelfreien Copolymermasse von mindestens einem 1,3-konjugierten Dien, ausgewählt aus der Gruppe, bestehend aus 1,3-Butadien, Isopren oder Piperylen und einer Styrolverbindung, wobei das Copolymere ein gewichtsmittleres Molekulargewicht von mindestens etwa 100.000 aufweist und durch Polymerisation des 1,3-konjugierten Diens und der vinylaromatischen Verbindung in einem Kohlenwasserstofflösungsmittel in Gegenwart eines trimetallisierten 1-Alkinkatalysators hergestellt worden ist, welcher das Reaktionsprodukt eines 1-Alkins mit mindestens 4 Kohlenstoffatomen, einer metallorganischen Verbindung R°M und eines 1,3-konjugierten Diens, hergestellt bei einer Temperatur von mindestens etwa 70°C umfaßt, wobei R° eine aliphatische oder eine cycloaliphatische Gruppe ist, M ein Alkalimetall ist, das Molverhältnis von R°M zu 1-Alkin etwa 3:1 ist und das Molverhältnis von konjugiertem Dien zu 1-Alkin 2:1 bis 30:1 ist; und

(A-2) 10 bis 90 Gew.-% mindestens eines Naturkautschuks; und

(B) 25 bis 150 Gewichtsteile mindestens eines Verstärkungsrußes pro 100 Teile Elastomergemisch (A).

**13.** Reifen nach Anspruch 12, dadurch **gekennzeichnet,** daß das Copolymere (A-1) 50 bis 80 Gew.-% 1,3-Butadien und 20 bis 50 % Styrolverbindung enthält.

**14.** Reifen nach Anspruch 12, dadurch **gekennzeichnet,** daß das gewichtsmittlere Molekulargewicht des Copolymeren (A1) mindestens etwa 900.000 beträgt.

**15.** Reifen nach Anspruch 12, dadurch **gekennzeichnet,** daß das Copolymere (A-1) durch ein kontinuierliches Verfahren hergestellt worden ist, welches folgendes umfaßt:

(A-1-a) kontinuierliche Einführung des konjugierten Diens, der Styrolverbindung, eines Kohlenwasserstofflösungsmittels und eines trimetallisierten 1-Alkin-Katalysators, der das Reaktionsprodukt eines 1-Alkins mit mindestens 4 Kohlenstoffatomen, einer Organolithiumverbindung und eines aliphatischen 1,3-konjugierten Diens umfaßt, in einen Reaktor bei einer Temperatur von mindestens 70°C, wobei das Molverhältnis von Organolithium zu 1-Alkin etwa 3:1 und das Molverhältnis von konjugiertem Dien zu 1-Alkin von 2:1 bis 30:1 ist bzw. reicht;

(A-1-b) kontinuierliches Durchbewegen des Reaktorinhalts während die Temperatur in dem Reaktor zwischen 75 und 125°C gehalten wird, um das Copolymere zu bilden; und

(A-1-c) kontinuierliches Abziehen des Copolymeren und des Kohlenwasserstofflösungsmittels aus dem Reaktor.

**16.** Reifen nach Anspruch 15, dadurch **gekennzeichnet,** daß das konjugierte Dien und die vinylaromatische Verbindung in den Reaktor als Kohlenwasserstofflösung, die das Dien und die vinylaromatische Verbindung enthält, eingeführt worden sind.

**17.** Reifen nach Anspruch 15, dadurch **gekennzeichnet,** daß das konjugierte Dien 1,3-Butadien und daß die Styrolverbindung Styrol ist.

**18.** Pneumatischer Reifen für Schwerlastfahrzeuge, bei dem mindestens der Laufflächenteil des Reifens aus einer vulkanisierbaren Elastomermasse hergestellt worden ist, die als Elastomerkomponente ein Elastomergemisch umfaßt, das 10 bis 90 Gew.-% einer gelfreien Copolymermasse mit ultrahohem Molekulargewicht aus einem 1,3-konjugierten Dien und einer aromatischen Vinylverbindung, wobei die Copolymermasse ein gewichtsmittleres Molekulargewicht von mehr als etwa 900.000 besitzt, und 10 bis 90 % Naturkautschuk enthält.

19. Reifen nach Anspruch 18, dadurch **gekennzeichnet,** daß das gewichtsmittlere Molekulargewicht des Copolymeren mit ultrahohem Molekulargewicht größer als etwa 1.100.000 ist.

20. Reifen nach Anspruch 18, dadurch **gekennzeichnet,** daß das Copolymere 50 bis 90 Gew.-% konjugiertes Dien und 10 bis 50 Gew.-% aromatische Vinylverbindung enthält.

21. Reifen nach Anspruch 18, dadurch **gekennzeichnet,** daß das konjugierte Dien 1,3-Butadien, Isopren oder Piperylen ist.

22. Reifen nach Anspruch 18, dadurch **gekennzeichnet,** daß die aromatische Vinylverbindung ein Styrol ist.

23. Reifen nach Anspruch 18, dadurch **gekennzeichnet,** daß das Elastomergemisch 30 bis 60 Gew.-% Copolymeres mit ultrahohem Molekulargewicht und 40 bis 70 Gew.-% Naturkautschuk enthält.

24. Reifen nach Anspruch 18, dadurch **gekennzeichnet,** daß die vulkanisierbare Elastomermasse auch 25 bis 250 Gewichtsteile Ruß pro 100 Gewichtsteile Elastomergemisch enthält.

**Revendications**

1. Bandage pneumatique pour véhicules poids-lourds, dans lequel au moins la portion dudit bandage pneumatique constituée par la bande de roulement est préparée à partir d'une composition élastomère vulcanisable comprenant, comme constituant élastomère, un mélange élastomère renfermant 10 % à 90 % en poids d'une composition, dépourvue de gel, de copolymère d'un diène conjugué en position 1,3 et d'un composé vinylique aromatique, et 10 % à 90 % de caoutchouc naturel, ladite composition de copolymère possédant une moyenne pondérale du poids moléculaire supérieure à environ 100 000 et le copolymère étant obtenu par polymérisation d'un diène conjugué et d'un composé vinylique aromatique en présence d'un catalyseur comprenant un 1-alcyne trimétallé obtenu par réaction, à une température supérieure à environ 70 °C, d'un 1-alcyne contenant au moins 4 atomes de carbone, d'un composé organométallique de formule R°M et d'un diène conjugué en position 1,3, l'alcyne étant caractérisé par la formule

   $RCH_2C{\equiv}CH$ (II)

   formules dans lesquelles R représente un groupe alkyle, R° représente un groupe hydrocarbyle, M représente un métal alcalin, le rapport molaire de R°M au 1-alcyne étant égal à environ 3:1 et le rapport molaire du diène conjugué au 1-alcyne étant compris dans l'intervalle de 2:1 à 30:1.

2. Bandage pneumatique suivant la revendication 1, dans lequel le métal alcalin M est le lithium.

3. Bandage pneumatique suivant la revendication 1, dans lequel R représente un groupe alkyle contenant 1 à environ 15 atomes de carbone.

4. Bandage pneumatique suivant la revendication 1, dans lequel le copolymère est obtenu par un procédé de polymérisation continue.

5. Bandage pneumatique suivant la revendication 1, dans lequel la moyenne pondérale du poids moléculaire du copolymère est supérieure à environ 900 000.

6. Bandage pneumatique suivant la revendication 1, dans lequel le copolymère comprend 50 % à 90 % en poids du diène conjugué et 10 % à 50 % en poids du composé vinylique aromatique.

7. Bandage pneumatique suivant la revendication 1, dans lequel le copolymère est préparé par un procédé continu qui comprend les étapes consistant :
   (A-1-a) à introduire de manière continue dans un réacteur un diène conjugué en position 1,3, un composé vinylique aromatique, un solvant hydrocarboné et un catalyseur de polymérisation comprenant un 1-alcyne trimétallé, ledit catalyseur étant obtenu par réaction, à une température supérieure à environ 70 °C, d'un 1-alcyne contenant au moins 4 atomes de carbone, d'un composé organométallique de formule R°M et d'un diène conjugué en position 1,3, l'alcyne étant caractérisé par la formule

$RCH_2C\equiv CH$ (II)

formules dans lesquelles R représente un groupe alkyle, R° représente un groupe hydrocarbyle, M représente un métal alcalin, le rapport molaire de R°M au 1-alcyne étant égal à 3:1, et le rapport molaire du diène conjugué au 1-alcyne étant compris dans l'intervalle de 2:1 à 30:1 ;

(A-1-b) à agiter de manière continue le contenu du réacteur tout en conduisant la réaction de polymérisation pour former le copolymère ; et

(A-1-c) à décharger de manière continue le copolymère du réacteur.

**8.** Bandage pneumatique suivant la revendication 7, dans lequel le contenu du réacteur est maintenu à une température de 30° à 150°C.

**9.** Bandage pneumatique suivant la revendication 7, dans lequel le diène conjugué et le composé aromatique vinylique sont introduits dans le réacteur sous forme d'une solution du diène et du composé aromatique vinylique dans un solvant hydrocarboné.

**10.** Bandage pneumatique suivant la revendication 7, dans lequel le catalyseur est introduit dans le réacteur sous forme d'une solution du catalyseur dans un solvant hydrocarboné.

**11.** Bandage pneumatique suivant la revendication 1, contenant également 25 à 250 parties en poids de noir de carbone pour 100 parties du mélange élastomère.

**12.** Bandage pneumatique pour véhicules poids-lourds, dans lequel au moins la portion dudit bandage pneumatique constituée par la bande de roulement est préparée à partir d'une composition élastomère vulcanisable comprenant :

(A) comme constituant élastomère, un mélange élastomère comprenant :

(A-1) 10 % à 90 % en poids d'une composition, dépourvue de gel, de copolymère d'au moins un diène conjugué en position 1,3 choisi dans le groupe consistant en le 1,3-butadiène, l'isoprène et le pipérylène et d'un dérivé de styrène, le copolymère ayant une moyenne pondérale du poids moléculaire égale à au moins environ 100 000 et étant préparé par polymérisation du diène conjugué en position 1,3 et du composé aromatique vinylique dans un solvant hydrocarboné en présence d'un catalyseur consistant en un 1-alcyne trimétallé qui consiste en le produit de réaction d'un 1-alcyne contenant au moins 4 atomes de carbone, d'un composé organométallique de formule R°M et d'un diène conjugué en position 1,3 prépare à une température d'au moins environ 70°C, R° représentant un groupe aliphatique ou cycloaliphatique, M représentant un métal alcalin, le rapport molaire de R°M au 1-alcyne étant égal à environ 3:1, et le rapport molaire du diène conjugué au 1-alcyne étant compris dans l'intervalle de 2:1 à 30:1 ; et

(A-2) 10 % à 90 % en poids d'au moins un caoutchouc naturel ; et

(B) 25 à 150 parties en poids, pour 100 parties du mélange élastomère (A), d'au moins un noir de carbone à effet de renforcement.

**13.** Bandage pneumatique suivant la revendication 12, dans lequel le copolymère (A-1) comprend 50 à 80 % en poids de 1,3-butadiène et 20 % à 50 % du dérivé de styrène.

**14.** Bandage pneumatique suivant la revendication 12, dans lequel la moyenne pondérale du poids moléculaire du copolymère (A-1) est égale à au moins environ 900 000.

**15.** Bandage pneumatique suivant la revendication 12, dans lequel le copolymère (A-1) est préparé par un procédé continu qui comprend les étapes consistant :

(A-1-a) à introduire de manière continue dans un réacteur le diène conjugué, le dérivé de styrène, un solvant hydrocarboné et un catalyseur qui est un 1-alcyne trimétallé qui consiste en le produit de réaction d'un 1-alcyne contenant au moins 4 atomes de carbone, d'un composé organique de lithium et d'un diène aliphatique conjugué en position 1,3 à une température d'au moins 70°C, le rapport molaire du composé organique de lithium au 1-alcyne étant égal à environ 3:1 et le rapport molaire du diène conjugué au 1-alcyne étant compris dans l'intervalle de 2:1 à 30:1 ;

(A-1-b) à agiter de manière continue le contenu du réacteur tout en maintenant la température à l'intérieur du réacteur dans l'intervalle de 75° à 125°C pour former le copolymère ; et
(A-1-c) à décharger de manière continue le copolymère et le solvant hydrocarboné du réacteur.

**16.** Bandage pneumatique suivant la revendication 15, dans lequel le diène conjugué et le composé aromatique vinylique sont introduits dans le réacteur sous forme d'une solution du diène et du composé aromatique vinylique dans un solvant hydrocarboné.

**17.** Bandage pneumatique suivant la revendication 15, dans lequel le diène conjugué est le 1,3-butadiène, et le composé du type styrène consiste en styrène.

**18.** Bandage pneumatique pour véhicules poids-lourds, dans lequel au moins la portion dudit bandage pneumatique constituée par la bande de roulement est préparée à partir d'une composition élastomère vulcanisable comprenant, comme constituant élastomère, un mélange élastomère renfermant 10 % à 90 % en poids d'une composition, dépourvue de gel, de ultra-haut poids moléculaire, de copolymère d'un diène conjugué en position 1,3 et d'un composé vinylique aromatique, ladite composition de copolymère possédant une moyenne pondérale du poids moléculaire supérieure à environ 900 000, et 10 % à 90 % de caoutchouc naturel.

**19.** Bandage pneumatique suivant la revendication 18, dans lequel la moyenne pondérale du poids moléculaire du copolymère de ultra-haut poids moléculaire est supérieure à environ 1 100 000.

**20.** Bandage pneumatique suivant la revendication 18, dans lequel le copolymère comprend 50 % à 90 % en poids du diène conjugué et 10 % à 50 % en poids du composé vinylique aromatique.

**21.** Bandage pneumatique suivant la revendication 18, dans lequel le diène conjugué est le 1,3-butadiène, l'isoprène ou le pipérylène.

**22.** Bandage pneumatique suivant la revendication 18, dans lequel le composé vinylique aromatique est un styrène.

**23.** Bandage pneumatique suivant la revendication 18, dans lequel le mélange élastomère comprend 30 % à 60 % en poids du copolymère de ultra-haut poids moléculaire et 40 % à 70 % en poids de caoutchouc naturel.

**24.** Bandage pneumatique suivant la revendication 18, dans lequel la composition élastomère vulcanisable contient également 25 à 250 parties en poids de noir de carbone pour 100 parties du mélange élastomère.

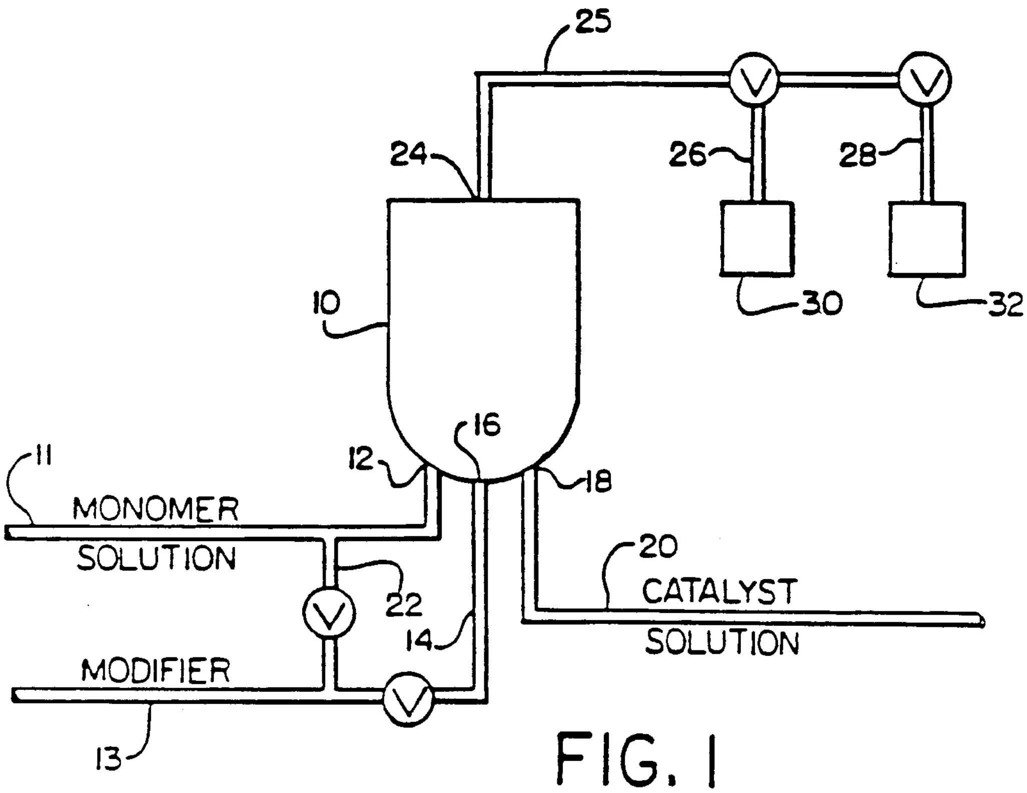
25
24
26
28
10
30
32
16
11
12
18
MONOMER
SOLUTION
20
CATALYST
SOLUTION
22
14
MODIFIER
13

FIG. 1

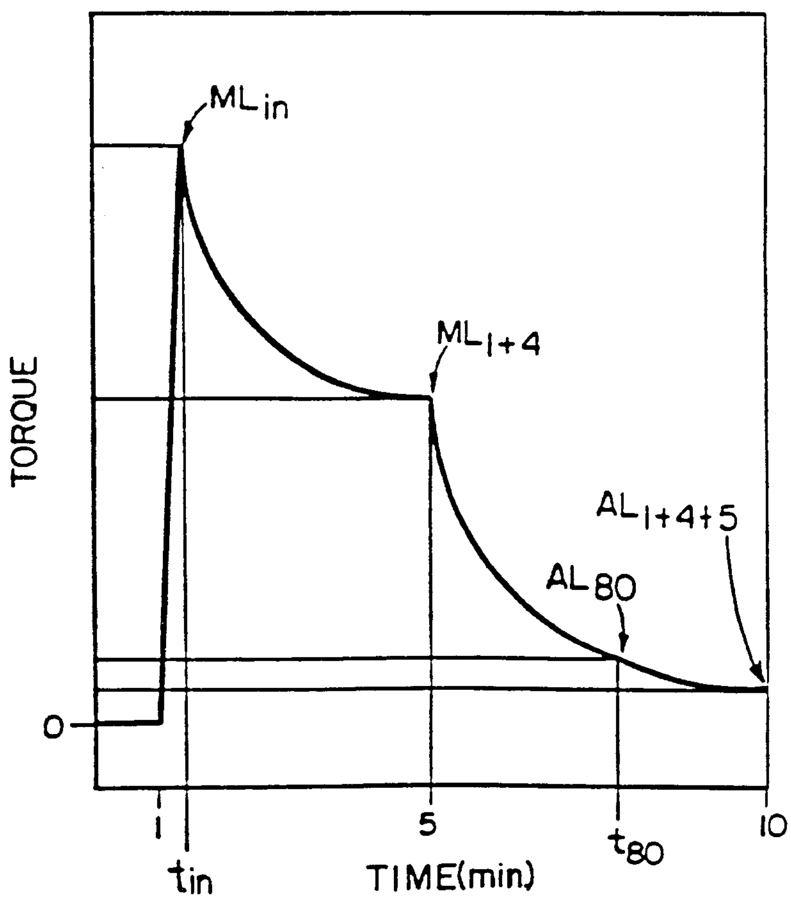
MLin
ML1+4
AL1+4+5
AL80
TORQUE
0
1
tin
5
TIME(min)
t80
10

FIG. 2